Europäisches Patentamt

European Patent Office

Office européen des brevets

(19)

(11) **EP 1 377 067 A1**

(12) **EUROPEAN PATENT APPLICATION**

(43) Date of publication:
**02.01.2004 Bulletin 2004/01**

(51) Int Cl.7: **H04N 7/26**, H04N 7/36,
H04N 7/50

(21) Application number: **03253805.0**

(22) Date of filing: **17.06.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **17.06.2002 JP 2002175919**

(71) Applicant: **Kabushiki Kaisha Toshiba
Tokyo 105-8001 (JP)**

(72) Inventors:
• **Kikuchi, Yoshihiro, c/o Int. Property Division
Minato-ku, Tokyo 105-8001 (JP)**
• **Chujoh, Takeshi, Int. Property Division
Minato-ku, Tokyo 105-8001 (JP)**
• **Koto, Shinichiro, Int. Property Division
Minato-ku, Tokyo 105-8001 (JP)**

(74) Representative: **Granleese, Rhian Jane
Marks & Clerk,
57-60 Lincoln's Inn Fields
London WC2A 3LS (GB)**

(54) **Motion vector coding**

(57)    A video encoding method comprises storing a plurality of encoded frames (rf0, rf1, rf2) of a video in a memory, generating a to-be-encoded frame (current) which is divided in a plurality of regions (A to E) including at least one encoded region (A to D) and at least one to-be-encoded region (E), generating a predictive vector (MV) of the to-be-encoded region of the to-be-encoded frame using a plurality of motion vectors (RCMV) as a plurality of reference vectors, the motion vectors being generated with respect to at least one reference frame selected from the encoded frames for a motion compensative prediction when encoding an original region of the encoded region around the to-be-encoded region of the to-be-encoded frame, and encoding the to-be-encoded frame to generate encoded video data.

FIG. 11

## EP 1 377 067 A1

**Description**

The present invention relates to a video encoding method for compression-encoding a video signal and a video encoding apparatus therefor and a video decoding method for decoding the compression-encoded data to reconstruct it into an original video signal.

As compression encoding systems for a video image are put to practical use broadly MPEG -1 (ISO / IEC 11172-2), MPEG -2 (ISO / IEC 13818-2), MPEG -4 (ISO / IEC 14496-2) and ITU-TH.263. In these encoding systems, a motion compensative prediction encoding are done by a combination of an intra-frame encoded picture (I picture), a forward prediction interframe encoded picture (P picture) and a bi-directional prediction encoded picture (B picture). The P picture is encoded using the P picture just before that or the I picture as a reference frame. The B picture is encoded using the P picture or I picture just before and after as a reference frame.

According to MPEG scheme, it is possible to generate a prediction image every macroblock from one frame or plural frames of the video image. In a case of the P picture, usually, a prediction picture is generated in units of a macroblock from one reference frame. In a case of the B picture, the prediction picture is generated using one of reference frames composed of forward and backward pictures. Alternatively, reference macroblocks are extracted from the forward and backward reference frames. From an average of the macroblocks is reconstructed a prediction picture. Prediction mode information indicating a prediction mode is embedded in the encoded data every macroblock.

In the bi-directional prediction for the B picture, the motion compensative prediction is performed from the forward and backward reference frames respectively. Therefore, there are problems that two motion vectors corresponding to the forward and backward pictures respectively are necessary every unit region (for example, macroblocks or small regions obtained by dividing the macroblock) to be subjected to a motion compensation and thus many encoded bits of the motion vector are required in comparison with the forward prediction using a single motion vector. Further there is a problem that when the motion compensative prediction is performed from a plurality of forward and backward frames the motion vectors corresponding to the reference frames are required, resulting in increasing the number of encoded bits of the motion vectors.

As described above, in a video encoding scheme to do a motion compensative prediction from a plurality of reference frames as being a bi-directional prediction in a conventional B picture, the motion vectors corresponding to the plurality of reference frames is necessary. For this reason, when these motion vectors are encoded, a problem to increase the number of encoded bits of the motion vectors occurs.

The object of the present invention is to provide a video encoding / decoding method that can reduce the number of encoded bits of motion vectors required for performing a motion compensative prediction from a plurality of reference frames and a video encoding / decoding apparatus therefor.

According to an aspect of the present invention, there is provided a video encoding method comprising: storing a plurality of encoded frames of a video in a memory; generating a to-be-encoded frame which is divided in a plurality of regions including at least one encoded region and at least one to-be-encoded region; generating a predictive vector of the to-be-encoded region of the to-be-encoded frame using a plurality of motion vectors as a plurality of reference vectors, the motion vectors being generated with respect to at least one reference frame selected from the encoded frames for a motion compensative prediction when encoding an original region of the encoded region around the to-be-encoded region of the to-be-encoded frame; and encoding the to-be-encoded frame to generate encoded video data.

According to another aspect of the present invention, there is provided a video encoding apparatus comprising: a memory which stores a plurality of encoded frames of a video and which stores a to-be-encoded frame which is divided in a plurality of regions including at least one encoded region and at least one to-be-encoded region; a generator which generates a predictive vector of the to-be-encoded region using a plurality of motion vectors as a plurality of reference vectors, the motion vectors being generated with respect to at least one reference frame selected from the encoded frames for a motion compensative prediction when encoding an original region of the encoded region around the to-be-encoded region of the to-be-encoded frame; and an encoder which encodes the to-be-encoded frame to generate encoded video data.

According to another aspect of the present invention, there is provided a video decoding method comprising: receiving encoded video data including encoded frames and a predictive vector generated using a plurality of motion vectors as a plurality of reference vectors in encoding, the motion vectors being generated with respect to at least one reference frame selected from the encoded frames for a motion compensative prediction when encoding an original region of an encoded region around a to-be-encoded region of the to-be-encoded frame; decoding the encoded video data to extract the prediction vector; generating the motion vectors from the predictive vector decoded; and decoding the encoded frames by means of motion compensative prediction using the generated motion vectors to reproduce a video.

According to another aspect of the present invention, there is provided a video decoding apparatus comprising: a receiving unit configured to receive encoded video data including encoded frames and a predictive vector generated using a plurality of motion vectors as a plurality of reference vectors in encoding, the motion vectors being generated with respect to at least one reference frame selected from the encoded frames for a motion compensative prediction when encoding an original region of an encoded region around a to-be-encoded region of the to-be-encoded frame; a first decoder unit configured to decode the encoded video data to extract the prediction vector; a generating unit configured to generate the motion vectors from the predictive vector decoded; and a second decoder unit configured to decode the encoded frames by means of motion compensative prediction using the generated motion vectors to reproduce a video.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram showing a configuration of a video encoding apparatus according to one embodiment of the present invention;
FIG. 2 is a block diagram that shows a configuration of a video decoding apparatus according to the embodiment;
FIG. 3 is a diagram showing the first example of a motion vector prediction encoding method in the embodiment;
FIG. 4 is a diagram showing the second example of a motion vector encoding method in the embodiment;
FIG. 5 is a diagram showing the third example of a motion vector prediction encoding method in the embodiment;
FIG. 6 is a diagram showing the fourth example of a motion vector prediction encoding method in the embodiment;
FIG. 7 is a diagram of explaining a method for encoding a quantity of movement between frames in the embodiment;
FIG. 8 is a diagram of explaining a method for encoding a quantity of movement between frames in the embodiment;
FIG. 9 is a diagram of explaining a method for encoding a quantity of movement between frames in the embodiment;
FIG. 10 is a diagram showing the fifth example of a motion vector prediction encoding method in the embodiment;
FIG. 11 is a diagram showing the sixth example of a motion vector prediction encoding method in the embodiment;
FIG. 12 is a diagram of explaining a positional relation of a macroblock of an object and macroblocks around the macroblock; and
FIG. 13 is a diagram showing the seventh example of a motion vector prediction encoding method in the embodiment.

An embodiment of the present invention will be described with reference to drawings.

(Encoding)

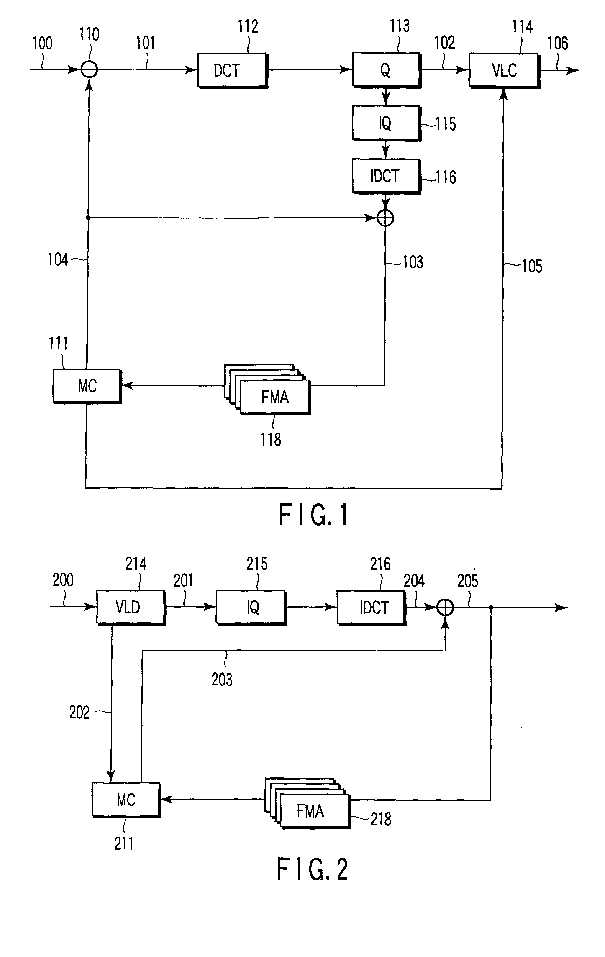

A video encoding apparatus shown in FIG. 1 may realized with hardware, and may be executed a computer by using software. Some of processes may be executed with hardware and the remaining ones of the processes may be executed by software.

In FIG. 1, an input image signal 100 is input to a subtractor 110 in units of a frame (or a picture) to generate a predictive error signal 101 which is an error of a prediction picture signal 104 with respect to the input video signal 100. The prediction picture signal 104 is generated by a motion compensative prediction unit (MC) 111 from at least one reference frame picture signal (or reference picture signal) temporarily stored in a reference frame memory set (FMA) 118. The reference frame memory set 118 comprises a plurality of frame memories.

The motion compensative prediction unit 111 carries out selection of reference frame, generation of predictive vector and motion compensative prediction. The predictive error signal 101 is encoded via a discrete cosine transformer (DCT) 112, a quantizer (Q) 113 and a variable length coder (VLC) 114. To encoded data 106 output from the variable length encoded 114 are added an index specifying the reference frame used in the motion compensative prediction and data 105 referred to side data as well as coded data 102 of a quantization DCT coefficient. The side data is generated by encoding, in units of a macroblock, information concerning generation of the predictive vector generated predicting the motion vector used for the motion compensative prediction. Encoded data 106 is sent to a storage system or a transmission system (not shown).

The output of the quantizer 113 is input to an inverse quantizer (IQ) 115. The quantized output passed through the inverse quantizer 115 and an inverse cosine transformer (IDCT) 116 is added to a prediction picture signal 104 to generate a decoded picture signal 103. The decoded picture signal 103 is temporarily saved as a reference frame in the reference frame memory set 118.

For example, new decoded picture signals are sequentially written in the reference frame memory set 118 as reference frames. In addition, the reference frames which are already stored in the reference frame memory set 118 are deleted sequentially from the oldest reference frame or from the reference frame whose frame output order described hereinafter shows the smallest value. In other words, the reference frame memory set 118 is controlled in so-called FIFO (First-In First-Out). To the decoded picture signal 103 may be added additional information such as flags showing whether it is used as a reference frame every frame unit, every macroblock, every group (slice) of plural macroblocks or every group of frames or slices. In this case, only a decoded picture signal used as a reference frame by the additional information is written in the reference frame memory set 118 as a picture signal of the reference frame, to be used for the motion compensative prediction of the following frame.

(Decoding)

FIG. 2 is a block diagram which shows a configuration of a video decoding apparatus corresponding to the video encoding apparatus shown in FIG. 1 according to the present embodiment. The video decoding apparatus may realized with hardware, and may be executed a computer by using software. Some of processes may be executed with hardware and the remaining ones of the processes may be executed by software.

To the video decoding apparatus shown in FIG. 2 is the encoded data output by the video encoding apparatus shown in FIG. 1 through the storage system or transmission system (not shown). The input decoded data 200 is subjected to a variable-length decoding by a variable length decoder (VLD) 214, so that quantized DCT coefficient data 201 and side data 202 are output.

The quantized DCT coefficient data 201 of the output from the variable length decoder 214 is decoded via an inverse quantizer (IQ) 215 and an inverse discrete cosine transformer (IDCT) 216 to generate a predictive error signal 204.

The side data of the output from the variable length decoder 214, i.e., the side data 202 including a motion vector encoded every macroblock and an index specifying a reference frame used for the motion compensative prediction is input to the motion compensative prediction unit (MC) 211. The motion compensative prediction unit 211 executes selection of the reference frame, generation of the predictive vector and the motion compensative prediction according to the side data 202 to generate a predictive picture signal 203. This predictive picture signal 203 is added to the predictive error signal 204 output from the inverse discrete cosine transformer 216 to generate a decoded picture signal 205.

The decoded picture signal 205 is temporarily stored as a reference frame in the reference frame memory set (FMA) 218. The reference frame memory set 218 may be controlled in FIFO similarly to the encoding. The decoded picture signal 205 written in the reference frame memory set 218 according to additional information may be used for the motion compensative prediction of the following object frame to be decoded. The additional information includes, for example, a flag added to the decoded picture signal 205 and representing whether it is used as a reference frame.

In the video encoding apparatus and decoding apparatus concerning the present embodiment, when the motion compensative prediction is performed using a plurality of motion vectors such as a bi-directional prediction for performing the motion compensative prediction from the forward and backward frames or the motion compensative prediction from the forward or backward frames, the motion vector is not directly encoded, but it is prediction-encoded. As a result, the number of encoded bits are decreased.

There are two following types of motion vector prediction encoding methods:

[I] A prediction coding method using a motion vector of an encoded frame as a reference vector.

[II] A prediction coding method using as a reference vector a motion vector of an encoded macroblock around a to-be-encoded block in a frame to be encoded.

In the predictive encoding method [I], when a small region in a reference frame selected in the motion compensative prediction unit 111 is encoded, a motion vector to be encoded is predicted using a motion vector used in the motion compensative prediction as a reference vector, whereby a predictive vector is generated.

On the other hand, in the video decoding apparatus shown in FIG. 2, when a small region in a reference frame selected in the motion compensation predictor 211 is encoded, a motion vector to be encoded is predicted using a motion vector used in the motion compensative prediction as a reference vector, whereby a predicted vector is generated.

In the predictive encoding method [II], when a plurality of encoded small regions around a small region to be encoded in a frame to be encoded are encoded in the motion compensative prediction unit 111, the first and second motion vectors to be encoded are predicted using a plurality of motion vectors used in the motion compensative prediction as a reference vector, whereby a predicted vector is generated.

On the other hand, in the video decoding apparatus shown in FIG. 2, when a plurality of encoded small regions around the small region to be encoded in the frame to be encoded are encoded in the motion compensation predictor 211, the first and second motion vectors to be encoded are predicted using a plurality of motion vectors used in the motion compensative prediction as a reference vector, whereby a predicted vector is generated.

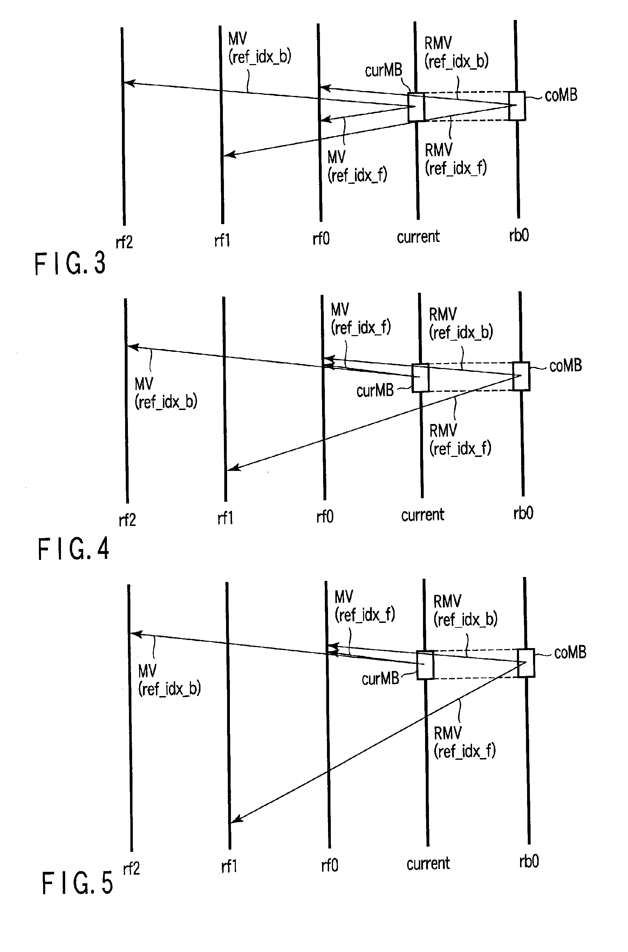

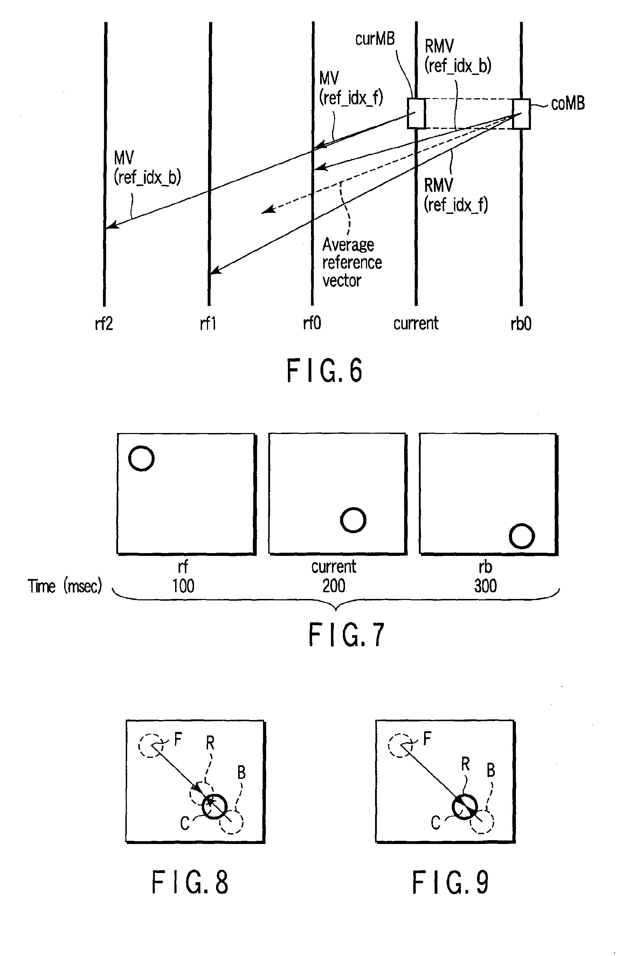

The predictive encoding method [I] will be described referring to FIGS. 3 to 8, and the predictive encoding method [II] referring to FIGS. 9 to 11.

As for the motion vector predictive encoding method [I] using a motion vector of an encoded frame as a reference vector:

FIGS. 3 to 6 show an example of generating a predicted vector by scaling a motion vector used in an encoded frame (refer to as a reference vector). In this case, the number of encoded bits of the motion vector can be reduced by encoding a difference vector between the reference vector and the predicted vector. Encoding of the motion vector may be omitted by using the predicted vector. In this case, the number of encoded bits of the motion vector can be further reduced. When data (the fourth data) obtained by encoding the difference vector is contained in the encoded data 106 output by the video encoding apparatus shown in FIG. 1, the data of the difference vector is decoded as a part of the side data 202 of the encoded data 200 input to the video decoding apparatus shown in FIG. 2, by the variable length decoder 214. The motion compensative prediction is performed using the motion vector obtained by adding the difference vector to the predictive vector.

In FIGS. 3 to 6, "current" indicates a current frame to be encoded, i.e., a frame to be encoded. rf0, rf1, rf2 and rb0 indicate reference frames corresponding to encoded frames. rf0 and rf1 show past reference frames. rb0 shows a future reference frame.

curMB shows a macroblock to be encoded in the frame to be encoded. coMB indicates an encoded macroblock (a reference macroblock) which is at spatially the same position as that of the block curMB in the reference frame rb0.

Which of the reference frames rf0, rf1, rf2 and rb0 is used for motion vector prediction is shown by encoding an index (reference frame index) indicating each of the reference frames rf0, rf1, rf2 and rb0.

In the example of FIGS. 3 to 6, since two reference frames rf0 and rf2 are used for prediction, an index value expressing a combination of two reference indexes ref_idx_f and ref_idx b corresponding to the reference frames rf0 and rf2 is encoded. The motion vectors corresponding to reference frame indexes ref_idx_f and ref_idx_b are expressed in MV(ref_idx_f) and MV(ref_idx_b) respectively. These are motion vectors to be prediction-encoded in the present embodiment.

Table 1

| Index | ref_idx_f | ref_idx_b |
|-------|-----------|-----------|
| 0 | rf0 | rb0 |
| 1 | rf1 | rf0 |
| 2 | rf2 | rf1 |
| 3 | rb0 | rf2 |

Table 1 shows a relation of the reference frame indexes ref_idx_f and ref_idx_b with respect to the reference frame and index value. The reference frames rf0 and rf2 used for prediction are shown by setting the index value as follows:

ref_idx_f=0

ref_idx_b=3

The table 1 shows different reference frames between two reference frame indexes ref_idx_f and ref_idx_b. However, the reference frame may identify between two reference frame indexes ref_idx_f and ref_idx_b as shown in table 2.

Table 2

| Index | ref_idx_f | ref_idx_b |
|-------|-----------|-----------|
| 0 | rf0 | rf0 |
| 1 | rf1 | rf1 |
| 2 | rf2 | rf2 |
| 3 | rb0 | rb0 |

<An example using a motion vector corresponding to the same reference frame index for prediction>

In an example of FIG. 3, a prediction motion vector is generated by scaling a motion vector (reference vector) from the reference frame corresponding to the same reference frame index. The reference vectors RMV(ref_idx_f) and RMV(ref_idx_b) show motion vectors from the reference frames used in encoding the reference macroblocks coMB and corresponding to the reference frame indexes ref_idx_f and ref idx_b.

In FIG. 3, distances from the frame (current) to be encoded to the reference frames rf0 and rf2 represented by the reference frame indexes ref_idx_f and ref_idx_b are referred to as FD 1 and FD 2. The distances from the reference frame rb0 with the reference macroblock coMB to the reference frames rf1 and rf0 represented by the reference frame indexes ref_idx_f and ref_idx_b are referred as to RFD 1 and RFD 2. The time intervals FD1, FD2, RFD1 and RFD2 described above are referred to as interframe distances, frame output order differences, or differences in picture output orders hereinafter.

In this case, the motion vectors MV(ref_idx_f) and MV(ref_idx_b) are obtained as predictive vectors by scaling the reference vectors RMV (ref_idx_f) and RMV(ref_idx_b) according to the interframe distances as follows:

$$MV(ref\_idx\_f)=S1*RMV(ref\_idx\_f), S1=FD1/RFD1$$

$$MV(ref\_idx\_b)=S2*RMV(ref\_idx\_b), S2=FD2/RFD2$$

where S1 and S2 are called scaling factors.

The predictive vector may be generated by selecting one of two motion vectors used for encoding the reference macroblocks coMB which are at spatially the same position in the reference frames corresponding to the same reference frame index. The method for generating such a predictive vector will be described referring to FIGS. 4 and 5.

<An exampler of using one of the reference vectors corresponding to the same reference frame index for a prediction of a motion vector>

In FIG. 4, when the reference vector RMV(ref_idx_b) corresponding to the reference frame index ref_idx_b exists, that is, when the motion vector RMV (ref_idx_b) is used in encoding the reference frame rb0, the vector RMV (ref_idx_b) is selected as a reference motion vector. This reference motion vector is scaled to generate the following predictive vectors.

$$MV(ref\_idx\_f)=S1*RMV(ref\_idx\_b), S1=FD1/RFD1$$

$$MV(ref\_idx\_b)=S2*RMV(ref\_idx\_b), S2=FD2/RFD2$$

In except for the above case, that is, when the reference vector RMV(ref_idx_b) does not exist but the reference vector RMV(ref_idx_f) corresponding to the reference index red_idx_f exists, more specifically, when in encoding of the reference frame rb0 the motion vector RMV(ref_idx_b) is not used but the motion vector RMV(ref_idx_f is used, the reference vector RMV(ref_idx_f) corresponding to the reference frame index ref_idx_f is selected as a reference motion vector. This reference motion vector may be scaled to generate the predictive vector as follows.

$$MV(ref\_idx\_f)=S1*RMV(ref\_idx\_f), S1=FD1/RFD1$$

$$MV(ref\_idx\_b)=S2*RMV(ref\_idx\_f), S2=FD2/RFD2$$

<An example using, for a prediction of a motion vector, a reference vector of the reference vectors corresponding to the same reference frame index, the reference vector being in distance near to the frame to be encoded>

As shown in FIG. 5, the predictive vector is generated by scaling the reference vector used for a prediction of one of two reference frames that is near to the encoded frame in a frame-to-frame distance. In the example of FIG. 5, two reference frames rf1 and rf0 are used for prediction in encoding the reference macroblock coMB. However, since the reference frame rf0 is nearer to the reference frame rb0 with the reference macroblock coMB than the reference frame rf1 in the frame-to-frame distance, a predictive vector is generated by scaling the reference vector RMV (ref_idx_b)

As a modification of FIG. 5, the reference vector whose index value is more smaller may be used for a prediction. When a reference frame index of table 2 is used, the index values are ref_idx_b=0 and ref_idx b=2 in the reference macroblock coMB. Since ref_idx_b is smaller in a value, the reference vector RMV(ref_idx_b) corresponding to ref_idx_b is scaled to generate a predictive vector.

The reference vector of the reference frame whose encoding order is near to the to-be-encoded frame may be used for a prediction. Supposing that the encoding order of frames is rf2, rf1, rf0, rb0 and current. In two reference frames rf0 and rf1 used for encoding of reference macroblock coMB, the frame rf0 is near to the reference frame rb0 with coMB, so that the reference vector RMV(ref_idx_b) corresponding to the reference frame rb0 is used for a prediction.

<Example which uses an average of two reference vectors for a prediction of a motion vector>

As shown in FIG. 6, the predictive vector is generated by scaling an average of two reference vectors. The average of two reference vectors (an average reference vector) and the average of the distances between the encoded frame rb0 and two reference frames (average frame-to-frame distance) are calculated as followed.

An average reference vector:

$$MRMV=(RMV(ref\_idx\_f)+RMV(ref\_idx\_b))$$

An average frame-to-frame distance:

$$MRFD=(RFD1+RFD2/2)$$

An average reference vector MRMV calculated in this way may be used as a predictive vector. Alternatively, from the average reference vector and average frame-to-frame distance, the predictive vector is generated by the following computation:

$$MV(ref\_idx\_f)=S1*MRMV, S1=FD1/MRFD$$

$$MV(ref\_idx\_b)=S2*MRMV, S2=FD2/MRFD$$

As modification, the same predictive vector can be generated even if the computation is simplified as follows:

$$MRMV=RMV(ref\_idx\_f)+RMV(ref\_idx\_b)$$

$$MRFD=MFD1+MFD2$$

$$MV(ref\_idx\_f)=S1*MRMV, S1=FD1/MRFD$$

$$MV(ref\_idx\_b)=S2*MRMV, S2=FD2/MRFD$$

The additional value obtained by weighted addition of two reference vectors may be used as a predictive vector as follows.

A weighted addition reference vector:

$$WSRMV=w1 \times RMV(ref\_idx\_f)+w2 \times MV(ref\_idx\_b)$$

A weighted addition frame-to-frame distance:

$$WSRFD= w1 \times RFD1+ w2 \times RFD2$$

where w1 and w2 are weighting factors. These may be predetermined factors, or may be encoded as side information. The computed weighted addition reference vector WSRMV as-is may be used as a predictive vector.

The predictive vector may be computed as follows:

$$MV(ref\_idx\_f)=S1*WSRMV, S1=FD1/WSRFD$$

$$MV(ref\_idx\_b)=S2*WSRMV, S2=FD2/WSRFD$$

Alternatively, the weighted addition is performed based on the frame-to-frame distance between a to-be-encoded frame and a reference frame as follows.

The computed vector WSRMV may be used as the predictive vector.

$$WSRMV=w1 \times RMV(ref\_idx\_f)+w2 \times MV(ref\_idx\_b)$$

$$w1=FD1/ (FD1+FD2), w2=FD1/ (FD1+FD2)$$

<As for a frame-to-frame distance and a scaling factor>

In the example of FIGS. 3 to 6, the frame-to-frame distances FD1-FD2 and RFD1-RFD2 may be calculated from a time position of each frame or a frame output order (a picture output order) as described later. Supposing that the frames rf2, rf1, rf0, current and rb1 are output in the frame output order of TRf2, TRf1, TRf0, TRc and TRb1. The frame-to-frame distances are calculated as FD1=TRc-TRf0, FD2=TRf2, RFD1=TPb0-TRf1 and RFD2=TRb0-TRf0. As for the frame output order (picture output order), the information indicating it (frame order or picture order) may be explicitly encoded. Alternatively, the frame-to-frame distance may be explicitly encoded.

Further, the scaling factors S1 and S2 may be directly encoded. The difference between each of the scaling factors S1 and S2 and the scaling factor used in the encoded frame may be encoded.

When parameters such as the frame output order (TRf2, TRf1, TRf0, TRc and TRb1) of these frames, the frame-to-frame distances (FD1, FD2, RFD1, RFD 2) and the scaling factors S1 and S2 are encoded, the parameters are not encoded every macroblock, but those may be encoded every given unit such as every picture, every frame, every field, every group of pictures, or every slice. The parameters may be encoded along with information indicating encoding modes and so on shown in a beginning of video encoding. The time position of the frame and frame-to-frame distance may be computed based on time information of each frame transmitted by other means such as a transmission layer or a file format, and scaled.

As is the cases of FIGS. 3 to 6, when the reference frame used for encoding is selected from candidates of many reference frames, the same frame-to-frame distance or the same scaling factor may be used for the candidates of all reference frames. The reference frames may be encoded separately. Some candidates selected from the candidates of reference frames may be encoded. In this case, the number of encoded bits can be reduced by performing the encoding every given unit such as every picture, every frame, every field, every group of pictures, or every slice.

<A motion vector of bi-directional prediction>

In FIGS. 3 to 6, two reference frames used for both of the reference macroblock coMB and current macroblock curMB are past frames (frames whose frame order is small). However, the present invention can be applied to a prediction using future reference frames (frames whose frame order is large) or a prediction (bi-directional prediction) using past and future reference frames. In this case, if the frame-to-frame distance can take both of negative and positive values, it is can be determined from the plus or minus signs of the negative and positive values whether the reference frame is past (earlier frame output order) or future (later frame output order), or two reference frames are in the same direction or opposite direction (in the frame output order).

(a) Encoding the frame order of TRf2, TRf1, TRf0, TRc and TRb1 or the frame-to-frame distances FD1, FD2, RFD1 and RFD2, and distinguishing whether the reference frame is past or future (earlier or later frame output order) by plus or minus sign of the frame-to-frame distance.

(b) Encoding scaling factors S1 and S2, and distinguishing whether the reference frame is future or past by plus or minus sign of the encoded factors.

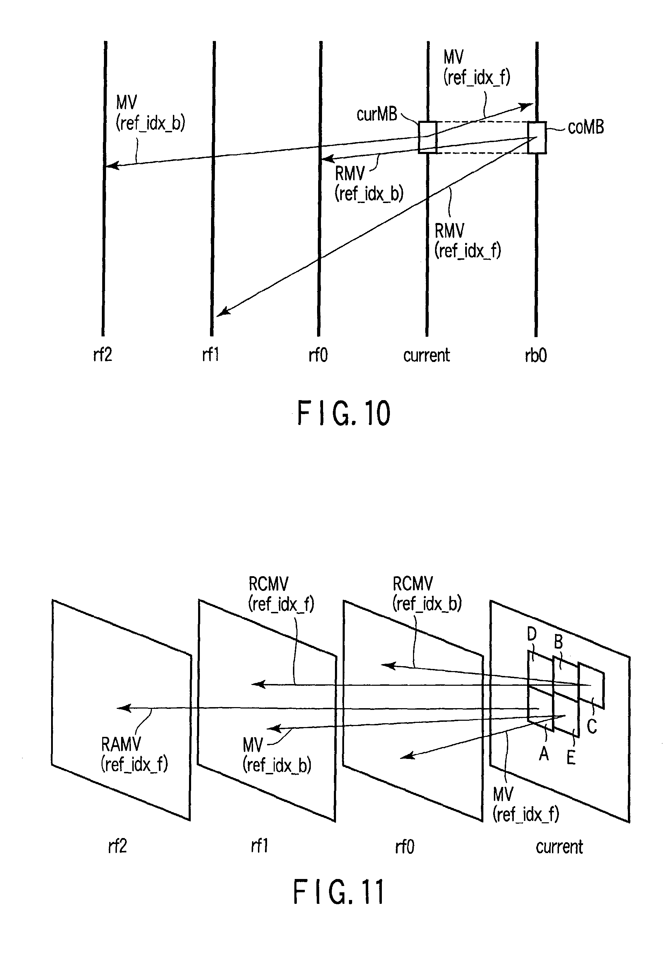

FIG. 10 is a diagram for explaining the above operation. According to an example of FIG. 10, the to-be-encoded macroblock curMB is subjected to a bi-directional prediction, and the reference macroblock coMB is predicted using two past reference frames. As for the macroblock curM, the reference frame rb0 corresponding to reference frame index ref_idx_f is future than the current frame current. There will be described a process for scaling the reference vector corresponding to the similar reference frame similarly to FIG. 3.

In the case (a): The frame order TRb0 of the reference frames rb0 corresponding to the reference frame index ref_idx_f indicates a value larger than the frame order TRc of the to-be-encoded frame current, and the frame-to-frame distance FD1=TRc-TRb0 becomes a negative value. Accordingly, it can be understood that the reference frame corresponding to the reference frame index ref_idx_f is future than the current frame, in other words, the reference frame is a frame whose frame order is backward or later in frame output. On the other hand, the frame order TRF2 of the reference frame rf2 corresponding to the reference frame index ref idx b indicates a value smaller than the frame order of the to-be-encoded frame current. The frame-to-frame distance FD2=TRc-TRf2 indicates a positive value. Accordingly, it can be understood that the reference frame rf2 corresponding to the reference frame index ref_idx_b is more past than the current frame, in other words, the frame order is forward or earlier in frame output order. In addition, by comparing the signs of two frame-to-frame distances to each other, it can be determined whether two corresponding reference frames are the same direction or the opposite direction in the frame output order. In an example of FIG. 10, since FD1 is negative and FD 2 indicates a sign different from the positive sign, it can be understood that two reference frames corresponding to the reference frame index ref_idx_f and the reference frame index ref_idx_b are in an opposite direction. Similarly, it is possible to determine a direction with respect to the reference motion vector. For example, the frame-to-frame distance RFD1=TRb0-TRf1 between the frame rb0 with coMB and the frame rf0 indicated by the RMV (ref_idx_f) is positive. On the other hand, since the frame-to-frame distance FD1 corresponding to MV(ref_idx_f) is negative, the motion vector MV(ref_idx_f) = FD1/RFD1*RMV(ref_idx_f) is to show a direction opposite to the reference vector RMV(ref_idx_f). As a result, the predictive vector corresponding to a prediction from the future reference frame is obtained as shown in FIG. 10.

In the case (b) : If the scaling factor S1 is a negative value, the motion vector MV(ref_idx_f) = S1*RMV (ref_idx_f) shows a direction opposite to the vector RMV (ref_idx_f). That is, a predictive vector predicted from the future reference frame is obtained as shown in FIG. 10.

<Example for using a movement quantity compensation factor for scaling>

In the above example, when scaling a reference vector in generation of a predictive vector, a time position of a frame, a frame output order (picture output order) or a frame-to-frame distance (time interval) is used. The predictive vector may be generated by scaling the reference vector by means of information (motion compensation factor) concerning a quantity of movement between the frames. FIGS. 7 to 9 are diagrams of explaining such the example.

The positions of the objects of the to-be-encoded frame current and reference frames rf and rb are shown by solid circles in FIG. 7. Under each frame, the time of the frame (the display time) is shown. The object shown in the solid circle moves from the upper left to the lower right in the frame. Assuming that the movement is at a non-equal speed, that is, the movement quality is not proportional to a time.

FIG. 8 shows an example for scaling a reference vector based on a time interval between the frames shown in FIG. 7. In FIG. 8, references C, F and B show the positions of the objects in the current frame current, reference frame rf and reference frame rb respectively. The motion vector MV of the to-be-encoded frame is obtained as a predictive vector by scaling, based on the time interval, the reference vector RMV used for a prediction from the reference frame rf when encoding the reference frame rb. In the example of FIG. 7, since the time of the to-be-encoded frame current is 200 msec and the times of the reference frames rf and rb are 100 msec and 300 msec respectively, the motion vector MV is calculated from the motion vector RMV as follows:

$$MV=RMV*(300-100)/200=RMV/2$$

In FIG. 8, the reference R shows the object position obtained by scaling the motion vector based on a time interval. As shown in FIG. 7, since the movement of the object is a non-equal speed motion, the object R subjected to a motion compensated prediction is deviated from the real object C in position. Therefore, the accurate motion compensated prediction can be done.

FIG. 9 shows an example which did scaling of a motion vector by means of information in consideration of quantity of movement between frames. The meaning of references C, F, B and R is the same as FIG. 8. The motion vector MV of the to-be-encoded frame current is obtained as a predictive vector by scaling, as a reference vector, the reference vector RMV used for a prediction from the reference frame rf when encoding the reference frame rb. In this case, the more accurate predictive vector can be obtained by scaling the vector according to the quantity of movement.

The information concerning the quantity of movement between frames may be directly encoded or position information can be encoded every frame. Further, the difference of each frame between a movement position of each frame and a reference movement position that is decided regularly may be encoded may be encoded. The above processes will be described hereinafter.

(a) Direct encoding of information concerning the quantity of movement between frames:

Information concerning the quantity of movement between the frames, that should be encoded is as follows.

MFcf: Quantity of movement from the frame rf to the frame current.

MFbf: Quantity of movement from the frame rf to the frame rb.

The motion vector MV is calculated from the reference vector RMV according to the following equation and used as a predictive vector.

$$MV=RMV*MFcf/MFbf$$

Alternatively, the movement quality information may be determined based on the time of the frame. In this case, precision of the vector generated by the scaling declines. However, since it is not necessary to calculate the quantity of movement, the process is simplified. Supposing that the times of the frames rf, current and rb are TRf, TRc and TRb respectively, the following equation is established.

$$MFcf=a*(TRc-TRf), MFcf=a*(TRb-TRf)$$

where $\underline{a}$ is a constant. When a=1, the movement quantity information is the same as the frame interval as follows:

$$MFcf=TRc-TRf, MFcf=TRb-TRf$$

The movement quantity information may be determined from the frame-to-frame distance. If the time interval between the to-be-encoded frame current and the frame rf is FDcf and the time interval between the frames b and f is FDbf, the movement quantity information is calculated as follows:

$$MFcf=a*FDcf, MFcf=a*FDbf$$

Since the frame rb is already encoded using the frame rf as a reference frame, the movement quantity MFbf from the frame rf to the frame rb may use a value encoded in encoding the frame rb. As a result, it is not necessary to encode the movement quantity MFbf in the to-be-encoded frame, whereby the number of encoded bits is reduced.

When there are a plurality of reference frames (or candidates), the quantity of movement between frames corresponding to them or selected ones thereof may be encoded.

(b) Encoding of movement position information every frame:

Encoding information corresponding to the movement position of an object (movement position information) in each frame. In other words, when encoding the frames rf, rb and current, the movement position information Mtf, MTb and MTc are encoded respectively. The motion vector MV is calculated as a predictive vector from a reference vector by the following equation:

$$MV=RMV*(MTf-MTc)/(MTf-MTb)$$

The movement position information MTf, MTb and MTc are set by calculating the quantity of movement from the reference frame in encoding each frame as the following equations:

$$MTc=MTf+MFcf$$

$$MTb=MTf+MFrb$$

MFcf: Quantity of movement from the frame rf to the frame current.

MFbf: Quantity of movement from the frame rf to the frame rb.

There may be set a constraint that the movement position information of a frame which is backward (future) in display time with respect to the to-be-encoded movement position information makes small than the movement location information of a frame which is forward (past) with respect to the same. In the example of FIG. 7, from the positional relation between the display times of the frames rf, rb and current, the display times TRf, TRb and TRc of the frames rf, rb and current indicate the following relation:

$$TRf<TRc<TRb$$

In this case, the following constraint is imposed on the movement position information of each frame.

$$MTf<MTc<MTb$$

It is possible by adding such a condition to express a temporal forward and backward relation (of display time) of the to-be-encoded frame from a large-and-small relation between the movement position information items as well as the movement information items for scaling. Alternatively, the movement position information items may be decided based on the time of a frame. In this case, precision of the scaled motion vector falls as compared with a case of determining movement position information based on the quantity of movement. However, a process is simplified since it is not necessary to calculate the quantity of movement. Assuming that the times of the frames rf, current and rb are TRf, TRc and TRb respectively.

$$MTf=a*TRf$$

$$MTc=a*TRc$$

$$MTb=a*TRb$$

Where $\underline{a}$ is a constant. Assuming that a=1, for example, the movement position information is identical to the time of each frame as follows:

$$Mtf = TRf, MTc=TRc, MTb=TRb$$

Alternatively the information obtained by compensating the time of each frame by movement position may be used.

(c) Encoding of a difference with respect to a reference movement position determined previously:

The movement position of each frame has a strong correlation with respect to the display time of the frame. For this reason, a movement position predicted from display time is used as a reference movement position, and a difference between this reference movement position and a movement position of each frame may be encoded. Concretely, if the movement information items of the frames rf, rb and current are MTf, MTb and MTc, respectively and the display times are TRf, TRb and TRc, the following differential information items DMTf, DMTb and DMTc are encoded.

$$DMTf=MTf-r*TRf$$

$$DMTb=MTb-r*TRb$$

$$DMTc=MTc-r*TRc$$

where $r$ is a constant determined previously.

The motion vector MV is generated as predictive vector from a reference vector by the following calculations.

$$MV=RMV*((DMTf+r*TRf) - (DMTc+r*TRc)) /((DMTf+r*TRf) - (DMTb+r*TRb))$$

Time information provided by means such as a transmission channel or a system or time information calculated in accordance with a predetermined rule may be used. Alternatively, movement quantity information between the frames is predicted from a time interval between the display times, and the prediction difference may be encoded.

<Scaling inhibit mode>

As above described, if a motion vector obtained by scaling the motion vector of the reference macroblock coMB is used as a predictive vector of a motion vector of the macroblock curMB to be encoded, the number of encoded bits of the motion vector is reduced. However, it is necessary to store the motion vector of the encoded frame, and thus a memory capacity increases. In particular, in the encoded macroblock, when a bi-directional motion compensation or a motion compensation using a plurality of future or past motion vectors is done, the plurality of motion vectors must be stored in a memory.

Therefore, in encoded macroblock, when an encoding mode using motion vectors more than the predetermined number of motion vectors, for example, two motion vectors is selected, such a scaling may be prohibited. As a result, the encoding efficiency deteriorates as compared to a case of generating a predictive vector by always scaling. However, increase of the memory capacity can be prevented.

[II] A method for prediction-encoding a motion vector using motion vectors of encoded macroblocks around a to-be-encoded block in a to-be-encoded frame as a reference vector.

In the predictive encoding method [I], a motion vector is subjected to a predictive encoding using the motion vector of the encoded frame. However, a predictive vector may be generated using a motion vector used by the macroblock which is already encoded in the to-be-encoded frame as a reference vector.

In this case, the number of encoded bits of the motion vector may be reduced by encoding a differential vector between a reference vector and a predictive vector. Encoding of the motion vector is omitted by using the predictive vector as it is, to reduce the number of encoded bits of the motion vector. As explained above, in the case that the encoded data (the fourth data) of the differential vector is contained in the encoded data 106 output by the video encoding apparatus shown in FIG. 1, the differential vector data as a part of the side data 202 included in the encoded data 200 input in the video decoding apparatus shown in FIG. 2 is decoded by the variable-length decoder 214. The motion compensative prediction is done by means of the motion vector obtained by adding the differential vector to the predictive vector.

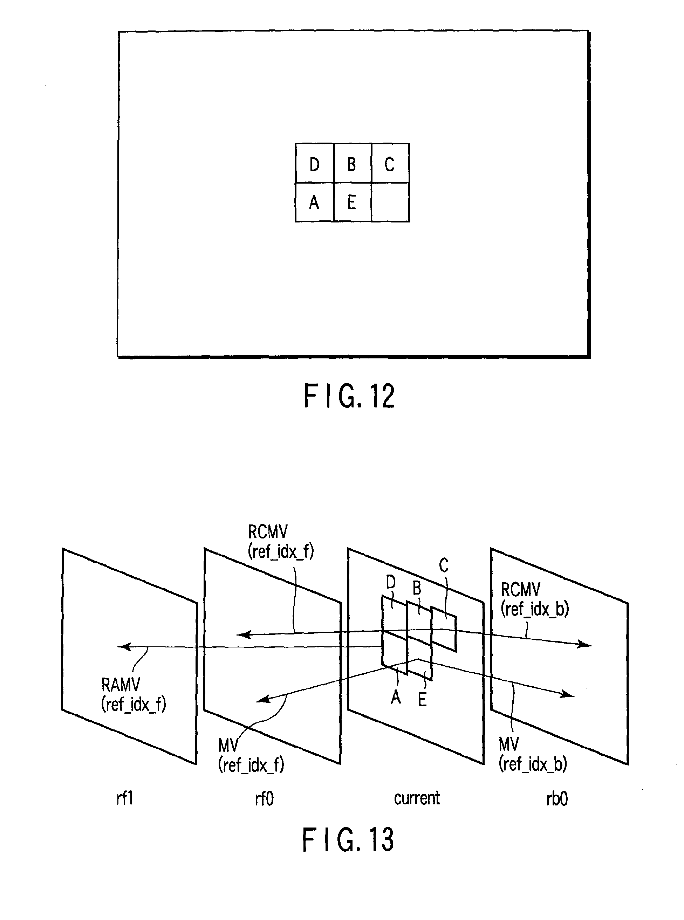

A motion compensative predictive encoding method of the sixth embodiment will be described referring to FIGS. 11 to 13.

FIG. 11 is a diagrams of explaining a first example of predicting a motion vector of a to-be-encoded block using motion vectors of encoded macroblocks around the to-be-encoded block as reference vectors. In FIG. 11, current shows the to-be-encoded frame, rf0, rf1 and rf2 show reference frames, and E indicates a to-be-encoded macroblock.

MV(ref_idx_f) and MV(ref_idx_b) are the motion vectors of the to-be-encoded macroblock E from the reference frames rf0 and rf1 shown by the reference frame indexes ref_idx_f and ref_idx_b respectively, that is, to-be-encoded vectors to be subjected to the predictive encoding. A, B, C and D are encoded macroblocks around the to-be-encoded macroblock E. FIG. 12 shows a spatial positional relation of the macroblocks A, B, C, D and E.

If the encoded macroblocks A, B, C and D around the to-be-encoded macroblock E have been encoded by means of the motion compensative prediction, the motion vector of the to-be-encoded macroblock E is predicted using the motion vectors of these macroblock A, B, C and D as reference vectors, to generate a predictive vector. The predictive vector may use an average of the motion vectors (reference vectors) of the encoded macroblocks A, B, C and D, and may use a center value of those vectors. Two motion vectors MV(ref_idx_f) and MV(ref_idx_b) for the to-be-encoded macroblock E are predicted using the reference vectors (motion vectors from the reference frames indicated by the reference frame indexes ref_idx_f and ref_idx_b) corresponding to the same reference frame indexes ref_idx_f and ref_idx_b of the encoded macroblocks A, B, C and D.

In the example of FIG. 11, the macroblock A is encoded by means of a single reference vector RAMV (ref_idx_f), the macroblock C is encoded using two reference vectors RCMV(ref_idx_f) and RCMV(ref_idx_b), and the macroblocks B and D are encoded by an encoding mode using no motion vector (for example, intra frame encoding mode). Since the reference vectors corresponding to the reference frame index ref_idx_f vector are RAMV(ref_idx_f) and RCMV(ref_idx_f), the motion vector MV(ref_idx_f) is predicted by means of the two reference vectors. On the other hand, since the reference vector corresponding to the reference frame index ref idx b is only RCMV (ref_idx_b), the motion vector MV(ref_idx_b) is predicted by means of this reference vector.

FIG. 13 shows the second example for predicting a motion vector of a to-be-encoded macroblock by means of the motion vectors of the encoded macroblocks around the to-be-encoded macroblock. In this example, the bidirectional motion compensation using a future frame as well as a past frame is used. In the figure, MV (ref_idx_b) and RCMV(ref_idx_b) indicate motion vectors from the future frame rf0.

Even if the bidirectional motion compensation is used as described above, the prediction of a motion vector is done by defining a relation between a reference frame index and a motion vector similarly to FIG. 11, regardless of whether the reference frame is past or future in display time. In other words, the motion vector MV(ref_idx_f) is predicted by the motion vector ((RAMV(ref_idx_f) and RCMV(ref_idx_f))corresponding to the reference frame index ref_idx_f of the circumferential encoded macroblock. The motion vector MV(ref_idx_b) is predicted by the motion vector (RCMV (ref_idx_b)) corresponding to the reference frame index ref_idx_b of the circumferential macroblock.

In this way, it differs from a conventional video encoding scheme such as MPEG-1/2/4 to determine a motion vector using the reference frame for the prediction according to the reference frame index, regardless of whether the reference frame is past or future in display time. When such a motion vector prediction is performed, it is not necessary to determine whether the reference frame is past or future than the to-be-encoded frame, and a process is simplified. Even if information indicating a temporal position relation of each frame is not encoded and it is difficult to get the information from other means such as a transmission layer or a file format, the motion vector can be predicted without determining whether the reference frame is past or future.

In the example of FIGS. 11 and 13, if there is not a corresponding reference vector for the reasons that the encoded macroblock around the to-be-encoded macroblock has been intraframe-encoded and is spatially located out of the frame, the predictive vector may be generated using the encoded macroblock as zero vector, for example, and a motion vector of the other macroblock adjacent to the encoded macroblock may be used.

In the example of FIGS. 11 and 13, the prediction motion vector may be generated using a reference vector selected from the reference vectors of a plurality of adjacent macroblocks according to a value shown by a reference frame index or a corresponding reference frame. For example, only a reference vector using, for motion compensative prediction, the same reference frame as that of the motion vector to be prediction-encoded may be used for a prediction of a motion vector. Alternatively, only the reference vectors that the values of the corresponding reference frame indexes (ref_idx_f and ref_idx_b) are the same may be used for a prediction of a motion vector. Alternatively, when the reference frame index corresponding to a reference motion vector indicates a certain specific value (index value =0s, for example), the reference frame index may be used for a prediction. On the contrary, when the reference frame index does not indicate a certain specific value, the reference frame index needs not use for a prediction. Alternatively, when the reference frame corresponding to a reference motion vector is a specific frame such as a frame which encoded just before that, a future frame, a frame before one frame in time, the reference frame may be used for a prediction or may not be used for the prediction.

This example will be described referring to FIG. 13. The relation between the to-be-encoded motion vector and reference vector on one side and the reference frame on other side is shown by table 3.

Table 3

| Motion vector / Reference vector | Reference frame |
|---|---|
| MV(ref_idx_f) | rf0 |
| RAMV(ref_idx_f) | rf1 |
| RCMV(ref_idx_f) | rf0 |
| MV(ref_idx_b) | rb0 |
| RCMV(ref_idx_b) | rb0 |

According to table 3, since the same reference frame index (ref_idx_f) as that of the motion vector MV (ref_idx_f) is used, and the reference vector using the same reference frame (rf0) is RCMV(ref_idx_f), the motion vector MV(ref_idx_f) is prediction-encoded using RCMV(ref_idx_f). Since the same reference frame index (ref_idx_b) as that of the motion vector MV(ref_idx_b) is used, and the reference vector using the same reference frame (rb0) is RCMV(ref_idx_b), the motion vector MV(ref_idx_b) is prediction-encoded using RCMV(ref_idx_b).

In the example of FIGS. 11 and 13, the reference vector of the encoded macroblock around the to-be-encoded macroblock may be scaled according to a time interval from the reference frame, for example, to use for the predictive vector. In the example of FIG. 11, the motion vector MV(ref_idx_f) of the to-be-encoded macroblock is predicted by the reference frame rf0 before one frame. On the contrary, the motion vector RAMV(ref_idx_f) of the macroblock A is predicted by the reference frame rf2 before three frames. The motion vector RCMV(ref_idx_f) of the macroblock C is predicted by the reference frame rf2 before two frames.

As thus described, when used reference frame is different, motion compensative prediction is effective in scaling of a motion vector by to-be-encoded frame and a circumference macroblock. In scaling of the motion vector, a scaling factor may be explicitly encoded. Information indicating a time interval with respect to the reference frame is encoded and the scaling factor may be calculated based on the information. Alternatively, the scaling factor may be calculated based on information indicating a time position of each frame.

The above process will be described referring to FIG. 11 hereinafter.

(1) A case of encoding of a scaling factor:

Encoding explicitly scaling factors SAf and SCf from RAMV(ref_idx_f) and RCMV(ref_idx_f).

Scaling a reference vector as follows:

$$RAMV(ref\_idx\_f)*SAf$$

$$RCMV(ref\_idx\_f)*SCf$$

Calculating a predictive vector based on these scaled motion vectors.

(2) A case of encoding a time interval with respect to a reference frame:

Encoding frame-to-frame distances FDf0, FDf2 and FDf2 between the reference frames rf0, rf2 and rf0 corresponding to MV(ref_idx_f), RAMV(ref_idx_f) and RCMV(ref_idx_f) and a to-be-encoded frame current.

Scaling a reference vector according to a frame-to-frame distance as follows:

$$RAMV(ref\_idx\_f)*FDf2/FDfO$$

$$RCMV(ref\_idx\_f)*FDf1/FDf0$$

Calculating a predictive vector based on these scaled motion vectors.

(3) A case of using a scaling factor from the time position of each frame or a value indicating the frame output order:

Setting the time positions of frames current, rf0, rf1 and rf2 to TRc, TRf0, TRf1 and TRf2 respectively or a value indicating the frame output order thereof to TRc, TRf0, TRf1 and TRf2.

Scaling a reference vector according to a frame-to-frame distance calculated from a time position:

$$RAMV(ref\_idx\_f)*(TRc-TRf2)/(TRc-TRf0)$$

$$RCMV(ref\_idx\_f)*(TRc-TRf1)/(TRc-TRf0)$$

Calculating a predictive vector based on these scaled motion vectors.

In the process, the parameters of the scaling factors SAf and SCf, the frame-to-frame distances F Df0, FDf2 and FDf2 and the time positions TRc, TRf0, TRf1 and TRf2 may be encoded every macroblock. However, the amount of information may be reduced more by encoding the parameters every massed encoding unit such as every frame or every slice.

In the video encoding of the above embodiments, a plurality of encoded frames of a video are storing in a memory. A to-be-encoded frame is divided in a plurality of regions including at least one encoded region and at least one to-be-encoded region. A predictive vector of the to-be-encoded region of the to-be-encoded frame is generated using a plurality of motion vectors as a plurality of reference vectors. The motion vectors are generated with respect to at least one reference frame selected from the encoded frames for a motion compensative prediction when encoding an original region of the encoded region around the to-be-encoded region of the to-be-encoded frame. The to-be-encoded frame is encoded to generate encoded video data.

In the video encoding apparatus of the above embodiments, a memory set stores a plurality of encoded frames of a video and a to-be-encoded frame that is divided in a plurality of regions including at least one encoded region and at least one to-be-encoded region. A motion compensative prediction unit generates a predictive vector of the to-be-encoded region using a plurality of motion vectors as a plurality of reference vectors. The motion vectors being generated with respect to at least one reference frame selected from the encoded frames for a motion compensative prediction when encoding an original region of the encoded region around the to-be-encoded region of the to-be-encoded frame. An encoder encodes the to-be-encoded frame to generate encoded video data.

In the video decoding of the above embodiment, the encoded video data includes encoded frames and a predictive vector generated using a plurality of motion vectors as a plurality of reference vectors in encoding. The motion vectors are generated with respect to at least one reference frame selected from the encoded frames for a motion compensative prediction when encoding an original region of an encoded region around a to-be-encoded region of the to-be-encoded frame; decoding the encoded video data to extract the prediction vector. The motion vectors are generated from the predictive vector. The encoded frame is decoded by means of motion compensative prediction using the generated motion vectors to reproduce a video.

In the video decoding apparatus of the above embodiments, the video decoding apparatus receives encoded video data including encoded frames and a predictive vector generated using a plurality of motion vectors as a plurality of reference vectors in encoding. The motion vectors are generated with respect to at least one reference frame selected from the encoded frames for a motion compensative prediction when encoding an original region of an encoded region around a to-be-encoded region of the to-be-encoded frame. A decoder decodes the encoded video data to extract the prediction vector. A motion compensative prediction unit generates the motion vectors from the predictive vector decoded. A decoder decodes the encoded frames by means of motion compensative prediction using the generated motion vectors to reproduce a video.

In the above embodiments, two reference frame indexes are expressed with ref_idx_f and ref_idx_b. However, they may be expressed with ref_idx_10 and ref_idx_11 or refIdxL0 and refIdxL1 respectively. Alternatively, ref_idx_f may be expressed with ref_idx_11 and refIdxL1, or ref_idx_b may be expressed with ref_idx_10 and refIdxL0. In addition, although two motion vectors are expressed with MV (ref_idx_f) and MV(ref_idx_b), they may be expressed with mvL0 and mvL1 respectively. Similarly, the reference motion vectors RAMV and RCMV in the example of FIG. 11 may be expressed with mvLXA and mvLXC, respectively. It is expressed by describing the list index LX as L0 and L1 that the reference motion vectors correspond to which of two reference frame indexes ref_idx_10 and ref_idx_11.

As discussed above, according to the present invention, in the motion compensation that a plurality of motion vectors are necessary, for example, a bi-directional prediction performing a motion compensative prediction from the forward and a motion compensative prediction from a plurality of backward frames or a plurality of forward frames, the motion vector is not directly encoded but it is prediction-encoded using the motion vector which is already encoded. As a result, the number of encoded bits to be necessary for transmission of the motion vector is reduced, and encoding / decoding of a video signal can be done with the small number of encoded bits.

**Claims**

1. A video encoding method **characterized by** comprising:

   storing a plurality of encoded frames of a video in a memory;
   generating a to-be-encoded frame which is divided in a plurality of regions including at least one encoded region and at least one to-be-encoded region;
   generating a predictive vector of the to-be-encoded region of the to-be-encoded frame using a plurality of motion vectors as a plurality of reference vectors, the motion vectors being generated with respect to at least one reference frame selected from the encoded frames for a motion compensative prediction when encoding an original region of the encoded region around the to-be-encoded region of the to-be-encoded frame; and
   encoding the to-be-encoded frame to generate encoded video data.

2. The video encoding method of claim 1, **characterized in that** generating the predictive vector includes generating an average of the reference vectors as the predictive vector.

3. The video encoding method of claim 1, **characterized in that** generating the predictive vector includes generating a median of the reference vectors as the predictive vector.

4. The video encoding method of any one of claims 1 to 3, **characterized in that** reference frames selected from the encoded frames includes at least one future frame and at least one past frame.

5. The video encoding method of any one of claims 1 to 4, **characterized in that** the method includes generating a plurality of reference frame indexes each expressing combination of at least two reference frames, and that generating the predictive vector includes predicting the predictive vector from the motion vectors corresponding to the reference frame index of the encoded region.

6. The video encoding method of claim 1, 4 or 5, **characterized in that** generating the predictive vector includes generating the predictive vector by scaling the reference vector of the encoded region according to a time interval between the reference frame corresponding to the reference vector and the to-be-encoded frame.

7. A video encoding apparatus comprising:

memory means (118) for storing a plurality of encoded frames of a video and which stores a to-be-encoded frame which is divided in a plurality of regions including at least one encoded region and at least one to-be-encoded region;

generator means (111) for generating a predictive vector of the to-be-encoded region using a plurality of motion vectors as a plurality of reference vectors, the motion vectors being generated with respect to at least one reference frame selected from the encoded frames for a motion compensative prediction when encoding an original region of the encoded region around the to-be-encoded region of the to-be-encoded frame; and

encoder means (114) for encoding the to-be-encoded frame to generate encoded video data.

8. The video encoding apparatus of claim 7, **characterized in that** the generator means (111) generates an average of the reference vectors as the predictive vector.

9. The video encoding apparatus of claim 7, **characterized in that** the generator means (111) generates a median of the reference vectors as the predictive vector.

10. The video encoding apparatus of any one of claims 7 to 9, **characterized in that** the memory means (118) stores the encoded frames including at least one future frame and at least one past frame.

11. The video encoding apparatus of any one of claims 7 to 9, **characterized in that** the generator means includes means (111) for generating a plurality of reference frame indexes each expressing combination of at least two reference frames, and means for predicting the predictive vector from the motion vectors corresponding to the reference frame index of the encoded region.

12. The video encoding apparatus of claim 7, 10 or 11, **characterized in that** the generator means (111) generates the predictive vector by scaling the reference vector of the encoded region according to a time interval between the reference frame corresponding to the reference vector and the to-be-encoded frame.

13. A video decoding method comprising:

receiving encoded video data including encoded frames and a predictive vector generated using a plurality of motion vectors as a plurality of reference vectors in encoding, the motion vectors being generated with respect to at least one reference frame selected from the encoded frames for a motion compensative prediction when encoding an original region of an encoded region around a to-be-encoded region of the to-be-encoded frame;

decoding the encoded video data to extract the prediction vector;

generating the motion vectors from the predictive vector decoded; and

decoding the encoded frames by means of motion compensative prediction using the generated motion vectors to reproduce a video.

14. The video decoding method of claim 13, **characterized in that** the predictive vector is formed of an average of the reference vectors.

**15.** The video decoding method of claim 13, **characterized in that** the predictive vector is formed of a median of the reference vectors.

**16.** The video decoding method of claim 13, **characterized in that** reference frames selected from the encoded frames includes at least one future frame and at least one past frame.

**17.** The video decoding method of claim 13, **characterized in that** decoding the encoded video data includes extracting, from the encoded video data, a reference frame index expressing combination of at least two reference frames, and decoding the encoded frames includes decoding the encoded frames using the predictive vector and the reference frames corresponding to the reference frame index.

**18.** The video decoding method of claim 13, **characterized in that** the predictive vector is a predictive vector generated by scaling the reference vector of the encoded region according to a time interval between the reference frame corresponding to the reference vector and the to-be-encoded frame.

**19.** A video decoding apparatus comprising:

receiving means for receiving encoded video data including encoded frames and a predictive vector generated using a plurality of motion vectors as a plurality of reference vectors in encoding, the motion vectors being generated with respect to at least one reference frame selected from the encoded frames for a motion compensative prediction when encoding an original region of an encoded region around a to-be-encoded region of the to-be-encoded frame;
first decoder means (214) for decoding the encoded video data to extract the prediction vector;
generating means (211) for generating the motion vectors from the predictive vector decoded; and
second decoder means (216) for decoding the encoded frames by means of motion compensative prediction using the generated motion vectors to reproduce a video.

**20.** The video decoding apparatus of claim 19, **characterized in that** the predictive vector is formed of an average of the reference vectors.

**21.** The video decoding apparatus of claim 19, **characterized in that** the predictive vector is formed of a median of the reference vectors.

**22.** The video decoding apparatus of any one of claims 19 to 21, **characterized in that** the second decoder means (216) generates at least one future frame and at least one past frame.

**23.** The video decoding apparatus of any one of claims 19 to 22, **characterized in that** the first decoder means (214) includes means for extracting, from the encoded video data, a reference frame index expressing combination of at least two reference frames, and the second decoder unit (216) includes a decoder which decodes the encoded frames using the predictive vector and the reference frames corresponding to the reference frame index.

**24.** The video decoding apparatus of claim 19, 22 or 23, which the second decoder means includes scaling means (211) for scaling the reference vector of the encoded region according to a time interval between the reference frame corresponding to the reference vector and the to-be-encoded frame, to generate the predictive vector.

FIG.1

FIG.2

F I G. 3

F I G. 4

F I G. 5

curMB
RMV (ref_idx_b)
MV (ref_idx_f)
coMB
MV (ref_idx_b)
RMV (ref_idx_f)
Average reference vector
rf2    rf1    rf0    current    rb0

F I G. 6

rf
100
current
200
rb
300
Time (msec)

F I G. 7

F    R
B
C

F I G. 8

F
R    B
C

F I G. 9

FIG. 10

FIG. 11

F I G. 12

F I G. 13

| | European Patent Office | EUROPEAN SEARCH REPORT | Application Number<br>EP 03 25 3805 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | "TEXT OF COMMITTEE DRAFT OF JOINT VIDEO SPECIFICATION (ITU-T REC. H-264 ISO/IEC 14496-10 AVC" INTERNATIONAL STANDARD ISO/IEC MPEG02/N4810 JVT-C167, 6 May 2002 (2002-05-06) - 10 May 2003 (2003-05-10), pages I-X,1-133, XP001074690 Fairfax, US | 1,3-7, 9-13, 15-19, 21-24 | H04N7/26 H04N7/36 H04N7/50 |
| Y | * page 9; figures 6-4 *<br><br>* page 41, paragraph 8.5.2.2 *<br>* page 43, paragraph 8.5.5 - paragraph 8.5.6 *<br>* page 45, paragraph 9.1.1.1 - page 47, paragraph 9.1.1.4 *<br>* page 47, paragraph 9.2 - page 48, paragraph 9.2.1.2 *<br>* page 81, paragraph 10.3.2 - page 83, paragraph 10.3.3 *<br>* page 100, paragraph 11.1 - page 106; figures 11-1,11-2,11-3,11-4 *<br>--- | 2,8,14, 20 | |
| Y | KOSSENTINI F, LEE, Y.-W., SMITH, M.J.T., WARD, R.K.: "PREDICTIVE RD OPTIMIZED MOTION ESTIMATION FOR VERY LOW BIT-RATE CODING" IEEE JOURNAL ON SELECTED AREAS IN COMMUNICATIONS, IEEE INC. NEW YORK, US, vol. 15, no. 9, 1 December 1997 (1997-12-01), pages 1752-1762, XP000726013 ISSN: 0733-8716 * page 1752, right-hand column, paragraph 3 - page 1756, left-hand column, paragraph 4 *<br>--- | 2,8,14, 20 | TECHNICAL FIELDS SEARCHED (Int.Cl.7)<br>H04N |

-/--

The present search report has been drawn up for all claims

| Place of search | Date of completion of the search | Examiner |
|---|---|---|
| BERLIN | 23 October 2003 | Gries, T |

EPO FORM 1503 03.82 (P04C01)

**European Patent Office**

**EUROPEAN SEARCH REPORT**

Application Number

EP 03 25 3805

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WIEGAND T ET AL: "LONG-TERM MEMORY MOTION-COMPENSATED PREDICTION" IEEE TRANSACTIONS ON CIRCUITS AND SYSTEMS FOR VIDEO TECHNOLOGY, IEEE INC. NEW YORK, US, vol. 9, no. 1, February 1999 (1999-02), pages 70-84, XP000802288 ISSN: 1051-8215 * page 71, right-hand column, paragraph 2 - page 72, right-hand column, paragraph 1; figure 1 * * page 74, right-hand column, line 11 * * page 75, left-hand column, paragraph 3 - right-hand column, paragraph 2; figure 8 * --- | 1-24 | |
| A | ARMITANO, R.M., SCHAFER, R.W.: "MOTION VECTOR ESTIMATION USING SPATIO-TEMPORAL PREDICTION AND ITS APPLICATION TO VIDEO CODING" PROCEEDINGS OF THE SPIE, SPIE, BELLINGHAM, VA, US, vol. 2668, 31 January 1996 (1996-01-31), pages 290-301, XP000909127 ISSN: 0277-786X * the whole document * --- -/-- | 1-24 | TECHNICAL FIELDS SEARCHED (Int.Cl.7) |

The present search report has been drawn up for all claims

| Place of search | Date of completion of the search | Examiner |
|---|---|---|
| BERLIN | 23 October 2003 | Gries, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................
& : member of the same patent family, corresponding document

EPO FORM 1503 03.82 (P04C01)

**European Patent Office**

**EUROPEAN SEARCH REPORT**

Application Number

EP 03 25 3805

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | "Recommendation H.263: Video coding for low bit rate communication" ITU-T DRAFT RECOMMENDATION H.263, February 1998 (1998-02), pages 1-167, XP002176560 Geneva, CH * page 38, paragraph 5.3.7 - page 40, paragraph 5.3.9 * * page 44, paragraph 6.1.1 - page 45 * * page 64, paragraph F.1 - page 65, paragraph F.2 * * page 68, paragraph G.1 - page 72, paragraph G.5 * --- | 1-24 | |
| A | ARMITANO, R., SCHAFER, R.W.: "Linear Predictive Coding of Motion Vectors" PROCEEDINGS PICTURE CODING SYMPOSIUM, September 1994 (1994-09), pages 233-236, XP008023240 Sacramento, Ca., US * the whole document * ----- | 1-24 | TECHNICAL FIELDS SEARCHED (Int.Cl.7) |

The present search report has been drawn up for all claims

| Place of search | Date of completion of the search | Examiner |
|---|---|---|
| BERLIN | 23 October 2003 | Gries, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)